# EUROPEAN PATENT APPLICATION

(11) **EP 4 597 527 A1**
(43) Date of publication of application: **06.08.2025**
(21) Application number: 25155139.6
(22) Date of filing: 31.01.2025
(51) Int. Cl.: H01F 1/057, H01F 41/02

(54) **NEODYMIUM-IRON-BORON MAGNET AND PREPARATION METHOD THEREOF**

(30) Priority: 01.02.2024 CN 202410142859
(71) Applicant: Yantai Dongxing Magnetic Materials Inc., Yantai City 265500 (CN)
(72) Inventor: Yang, Kunkun, Yantai City, 265500 (CN); Peng, Zhongjie, Yantai-City, 265500 (CN); Ding, Kaihong, Yantai City, 265500 (CN)
(74) Representative: Gulde & Partner

(57) **Abstract**

Provided is a neodymium-iron-boron magnet and preparation method thereof. It relates to the technical field of magnet preparation. The preparation method includes the following steps: preparing a FeₐG_{b} metal sheet (1), covering the FeₐG_{b} metal sheet with a rare earth compound REₓM_{y}B_{z} layer (2), performing multi-layer stacking on the metal sheet (1)covered with the rare earth compound REₓM_{y}B_{z} layer (2), and then performing high-temperature diffusion under an extrusion force with certain strength, so as to prepare a neodymium-iron-boron magnet. By using the method to prepare the neodymium-iron-boron magnet, the production process is high in safety, the production process is simple, the product size and shape limitation is small, the production period is short, and the material utilization rate is high.

## Description

### TECHNICAL FIELD

The present disclosure relates to the field of production preparation of permanent magnetic materials, and in particular, to a neodymium-iron-boron magnet and a preparation method thereof.

### BACKGROUND

Neodymium-iron-boron magnets are widely used in modem industry and electronics. According to preparation methods, the neodymium-iron-boron magnets may be classified into sintered neodymium-iron-boron magnets, bonded neodymium-iron-boron magnets, and hot-pressed neodymium-iron-boron magnets. Different preparation methods have different advantages and disadvantages.

Chinese Patent Application CN115083713A disclosed a sintered neodymium-iron-boron magnet and a preparation method thereof. The preparation method includes: first, a neodymium-iron-boron sheet was prepared; then the neodymium-iron-boron sheet was crushed into micron-sized neodymium-iron-boron powder; finally, the neodymium-iron-boron powder was taken out, compressed, and sintered, and the neodymium-iron-boron magnet was obtained after aging treatment. The process of preparing the neodymium-iron-boron magnet through sintering is complex, and since the micron-sized neodymium-iron-boron powder is extremely easy to oxidize and burn, leading to increasing of danger during neodymium-iron-boron production. Using the sintering method to prepare a special-shaped neodymium-iron-boron product (especially a thin product) is relatively difficult. In common methods, a required shape is processed by using a neodymium-iron-boron magnet that is sintered into a square, and waste is created inevitably during this process.

Chinese Patent Application CN108538561A disclosed a bonded neodymium-iron-boron magnet and a preparation method thereof. The preparation method includes: first, thermosetting binder powder and neodymium-iron-boron powder were mixed to form a magnetic powder mixture; and then the magnetic powder mixture was put in a mold and pressed to obtain a magnet green body, and finally the neodymium-iron-boron magnet was obtained through curing. The entire production process of the neodymium-iron-boron magnet formed through bonding is simple and small in danger, and neodymium-iron-boron products with various shapes and sizes may be manufactured. However, a large number of organic binders are used during the production of the neodymium-iron-boron magnet formed through bonding, causing the density of the magnet to be relatively low, and the residual magnetism and mechanical property of the magnet to be relatively low. Due to the presence of the organic binders, the bonded magnet cannot operate at a high temperature.

Chinese Patent Application CN110753978A disclosed a hot deformation magnet and a method for preparing a hot deformation magnet. The preparation method includes: first, a neodymium-iron-boron rapid-quenching sheet was manufactured, then the rapid-quenching sheet was crushed, and then production was performed through hot extrusion and thermal rheology. The process of preparing a neodymium-iron-boron magnet through hot pressing is high in difficulty, low in production efficiency, and poor in performance uniformity of products, and is difficult to manufacture products with special shapes and larger or smaller sizes.

### SUMMARY

In order to overcome the disadvantages of an existing process of preparing a neodymium-iron-boron magnet, the present disclosure provides a new neodymium-iron-boron preparation method.

The invention is defined by the appended claims. The description that follows is subjected to this limitation. Any disclosure lying outside the scope of said claims is only intended for illustrative as well as comparative purposes.

The present disclosure provides a method for preparing a neodymium-iron-boron magnet. The preparation method includes the following steps.

(S1), preparing a FeₐG_{b} metal sheet, and covering at least one side surface of the FeₐG_{b} with a rare earth compound REₓM_{y}B_{z} coating,
wherein in the FeₐG_{b} metal sheet:
Fe is iron,
G is one or more element selected from the group consisting of Sc, Ti, V, Cr, Mn, Co, Ni, Cu, Zn, Ga, Ge, Y, Zr, Nb, Mo, Ru, Rh, Pd, Ag, Cd, In, Sn, Sb, Lu, Hf, Ta, W, Re, Os, Ir, Pt, Au, Hg, Tl, Pb, Bi, La, Ce, Pr, Nd, Pm, Sm, Eu, Gd, Tb, Dy, Ho, Er, Tm, and Yb, and
a and b are mass percentages, wherein 70%≤a≤100% and 0%≤b≤30%, and
wherein in the rare earth compound REₓM_{y}B_{z} coating:
   RE is one or more rare-earth element selected from the group consisting of Sc, Y, La, Ce, Pr, Nd, Sm, Eu, Gd, Tb, Dy, Ho, Er, Tm, Yb, and Lu,
   M is one or more element selected from the group consisting of Fe, Al, Ti, Cu, Zn, Mn, Co, and Ga,
   B is a boron, and
   x, y, and z are mass percentages, wherein 650%≤x≤98%, 1%≤z≤5%, and y=1-x-z.
   (S2), mutually stacking the FeₐG_{b} metal sheets covered with the rare earth compound REₓM_{y}B_{z} coatings are mutually stacked to a set thickness in a tool, and after stacking, ensuring that there is at least one rare earth compound REₓM_{y}B_{z} coating between the adjacent two FeₐG_{b} metal sheets.
   (S3), applying an extrusion force to the stacked FeₐG_{b} metal sheets, and performing high-temperature diffusion on the metal sheets under a vacuum condition, so as to obtain the neodymium-iron-boron magnet.

The metal sheet may also contain unavoidable impurities. The proportions of all components of the metal sheet sum up to 100 mass percentage.

The coating may also contain unavoidable impurities. The proportions of all components of the coating sum up to 100 mass percentage.

According to an embodiment, Fe in the FeₐG_{b} metal sheet is an iron element, G is one or more selected from an aluminum element, a titanium element, a copper element, a zinc element, a manganese element, a cobalt element, a nickel element, a niobium element, a molybdenum element, a zirconium element, and a chromium element, and a and b are mass percentages, where 75%≤a≤100% and 0%≤b≤25%.

According to an embodiment, RE in the rare earth compound REₓM_{y}B_{z} coating is one or more selected from a neodymium element, a praseodymium element, a cerium element, a lanthanum element, a terbium element, a dysprosium element, or a holmium element, M is one or more selected from an iron element, an aluminum element, a titanium element, a copper element, a zinc element, a manganese element, a cobalt element, or a gallium element, B is a boron element, and x, y, and z are mass percentages, where 70%≤x≤95%, 2%≤z≤4%, and y=1-x-z.

According to an embodiment, a mass of the single FeₐG_{b} metal sheet is defined as M₁, and the mass of the rare earth compound REₓM_{y}B_{z} coating on the single FeₐG_{b} metal sheet is defined as M₂, where 40%≤M₂/M₁≤80%.

Further, a thickness of the single FeₐG_{b} metal sheet may be defined as h₁, where 0.01mm≤h₁≤0.6mm, preferably 0.02mm≤h₁≤0.5 mm.

Further, a thickness of the stacked FeₐG_{b} metal sheets and a thickness of the rare earth compound REₓM_{y}B_{z} coatings may be defined as h₂, wherein 0.03≤h₂≤90mm, preferably 0.04≤h₂≤80mm.

Further, covering the surface of the FeₐG_{b} metal sheet with the rare earth compound REₓM_{y}B_{z} coating may include at least one of vacuum coating, plasma spraying, and thermal spraying.

Further, the FeₐG_{b} metal sheets may be mutually stacked to form a square, a tile-like shape, a cylindrical shape, or a ring shape.

According to an embodiment, a diffusion temperature in step (S3) is 1000°C to 1200°C, and a diffusion time is 0.5h to 10h.

A neodymium-iron-boron magnet is prepared by the above method.

The neodymium-iron-boron magnet and the preparation method thereof disclosed in the present disclosure have the following beneficial effects.
(1) When the neodymium-iron-boron magnet is prepared by using the method, highly flammable micron-sized neodymium-iron-boron powder may be prevented from being used, such that the safety of the entire production is improved; an organic binder may also be prevented from being used, thereby increasing the residual magnetism of a magnet and a use temperature; and the entire manufacturing process is less in production process and short in production cycle, such that required products with various shapes may be directly produced, thereby avoiding losses due to machining.
(2) The method uses a stacking manner to achieve production processing, the local performance of the magnet may be adjusted by adjusting components of the FeₐG_{b} metal sheets in single-layer or multi-layer regions, or adjusting the components of the rare earth compounds or the mass percentages of the rare earth compounds and the FeₐG_{b} metal sheets, so as to prepare some magnets with gradient distribution of magnetic properties, thereby ensuring that the magnets can have better demagnetization resistance in some specific demagnetization environments.

### BRIEF DESCRIPTION OF THE DRAWINGS

Figure 1 is a schematic diagram of a FeₐG_{b} metal sheet with a surface coated with a layer of rare earth compound REₓM_{y}B_{z}.
Figure 2 is a schematic diagram of FeₐG_{b} metal sheets covered with rare earth compound REₓM_{y}B_{z} coatings and stacked into a square.
Figure 3 is a schematic diagram of FeₐG_{b} metal sheets covered with rare earth compound REₓM_{y}B_{z} coatings and stacked into a tile-like shape.
Figure 4 is a schematic diagram of FeₐG_{b} metal sheets covered with rare earth compound REₓM_{y}B_{z} coatings and stacked into a ring shape.
Figure 5 is a schematic diagram of FeₐG_{b} metal sheets covered with rare earth compounds REₓM_{y}B_{z} and stacked into a cylindrical shape.

### DETAILED DESCRIPTION OF THE EMBODIMENTS

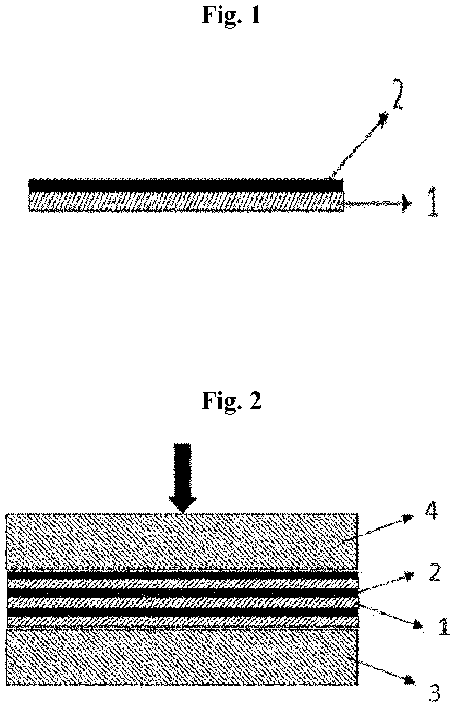

Principles and features of the present disclosure are described with reference to Figure 1 to Figure 5. Embodiments are merely for explaining the present disclosure, and are not used to limit scope of the present disclosure.

### Embodiment 1

(S1) A FeₐG_{b} metal ingot was smelted, and then extruded into a FeₐG_{b} metal sheet through extrusion. In this embodiment, FeₐG_{b} was Fe₉₀Ti₂Ni₃Zr₅, that is, G represented a group of a titanium element, a nickel element, and a zirconium element. a and b were mass percentages, a was 90%, and b was 10%, where a mass percentage of the titanium element was 2%, a mass percentage of the nickel element was 3%, and a mass percentage of the zirconium element was 5%. A rare earth compound REₓM_{y}B_{z} coating 2 was sprayed on an upper surface of the Fe₉₀Ti₂Ni₂Zr₅ metal sheet through thermal spraying. In this embodiment, REₓM_{y}B_{z} was Nd₇₀Al_{3.8}Cu₄Ga₂Ti_{2.2}Fe₁₆B₂, that is, RE was a neodymium element, M was a group of an aluminum element, a copper element, a gallium element, a titanium element, and an iron element, and B was a boron element. x, y, and z were mass percentages. In this embodiment, x was 70%, that is, a mass percentage of the neodymium element was 70%; y was 28%, that is, a total mass percentage of the aluminum element, copper element, gallium element, titanium element, and iron element was 28%, where a mass percentage of the aluminum element was 3.8%, a mass percentage of the copper element was 4%, a mass percentage of the gallium element was 2%, a mass percentage of the titanium element was 2.2%, and a mass percentage of the iron element was 16%; and z was 2%, that is, a mass percentage of the boron element was 2%. A mass of the single FeₐG_{b} metal sheet 1 was defined as M₁, and a mass of the rare earth compound REₓM_{y}B_{z} coating 2 on the single FeₐG_{b} metal sheet 1 was defined as M₂, where M₂/M₁=70%. A thickness of the single FeₐG_{b} metal sheet 1 was defined as h₁, and in this embodiment, h₁=0.35mm.

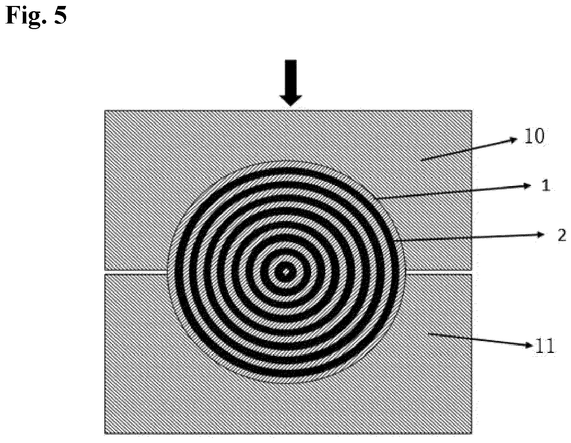

(S2) A plurality of Fe₉₀Ti₂Ni₂Zr₅ metal sheets covered with the rare earth compound Nd₇₀Al_{3.8}Cu₄Ga₂Ti_{2.2}Fe₁₆B₂ coatings were stacked into a cylindrical shape in a cylindrical tool with a length being 20mm and an inner diameter being 60mm, a thickness of the stacked FeₐG_{b} metal sheets 1 was defined as h₂, and in this embodiment, h₂=30mm, and a diameter of the cylindrical shape was 60mm. After stacking, it should ensure that there was at least one rare earth compound REₓM_{y}B_{z} coating 2 between the adjacent two FeₐG_{b} metal sheets 1. Referring to Figure 5 for a specific tool, 10 was an upper cylindrical extrusion tooling mold, 11 was a lower cylindrical extrusion tooling mold, and an arrow represented a force applying direction.

(S3) An extrusion force was applied to the stacked FeₐG_{b} metal sheets 1, and was subjected to high-temperature diffusion under a vacuum condition, so as to prepare a neodymium-iron-boron magnet, where a diffusion temperature was 1100°C, and a diffusion time was 5h; and finally, a cylindrical neodymium-iron-boron magnet with a diameter being 60mm and a height being 20mm was obtained.

The above obtained neodymium-iron-boron magnet was cut into a sample column with a diameter being 10mm and a height being 10mm, then a magnetic performance test (temperature being 20°C±3°C) was performed, and test results were recorded in Table 1.

**Table 1 Magnetic performance of sample in Embodiment I**

| Magnet name | Br (KGs) | Hcj (KOe) |
|---|---|---|
| Embodiment 1 | 10.87 | 10.2 |

From the above test results, it might be seen that, Br of the cylindrical magnet prepared in Embodiment 1 was 10.87, and Hcj was 10.2 and had high magnetic performance.

### Embodiment 2

(S1) A FeₐG_{b} metal ingot was smelted, and then extruded into a FeₐG_{b} metal sheet 1 through extrusion. In this embodiment, FeₐG_{b} was Fe₉₀Cr₉Al_{0.5}Zn_{0.5}, that is, G represented a group of a chromium element, an aluminum element, and a zinc element. a and b were mass percentages, a was 90%, and b was 10%, where a mass percentage of the chromium element was 9%, a mass percentage of the aluminum element was 0.5%, and a mass percentage of the zinc element was 0.5%. A rare earth compound REₓM_{y}B_{z} coating 2 was sprayed on an upper surface of the Fe₉₀Cr₉Al_{0.5}Zn_{0.5} metal sheet through vacuum coating. In this embodiment, REₓM_{y}B_{z} was Nd₇₂Dy₁Ho₂Cu₃Ti_{0.3}Zn_{0.2}Fe₁₉B_{2.5}, that is, RE was a group of a neodymium element, a dysprosium element, and a holmium element, M was a group of a copper element, a titanium element, a zinc element, and an iron element, and B was a boron element. x, y, and z were mass percentages. In this embodiment, x was 75%, that is, a mass percentage of the neodymium element was 72%, a mass percentage of the dysprosium element was 1%, and a mass percentage of the holmium element was 2%; y was 22.5%, where a mass percentage of the copper element was 3%, a mass percentage of the titanium element was 0.3%, a mass percentage of the zinc element was 0.2%, and a mass percentage of the iron element was 19%; and z was 2.5%, that is, a mass percentage of the boron element was 2.5%. A mass of the single FeₐG_{b} metal sheet 1 was defined as M₁, and a mass of the rare earth compound REₓM_{y}B_{z} coating 2 on the single FeₐG_{b} metal sheet 1 was defined as M₂, where M₂/M₁ = 80%. A thickness of the single FeₐG_{b} metal sheet 1 was defined as h₁, and in this embodiment, h₁=0.2mm.

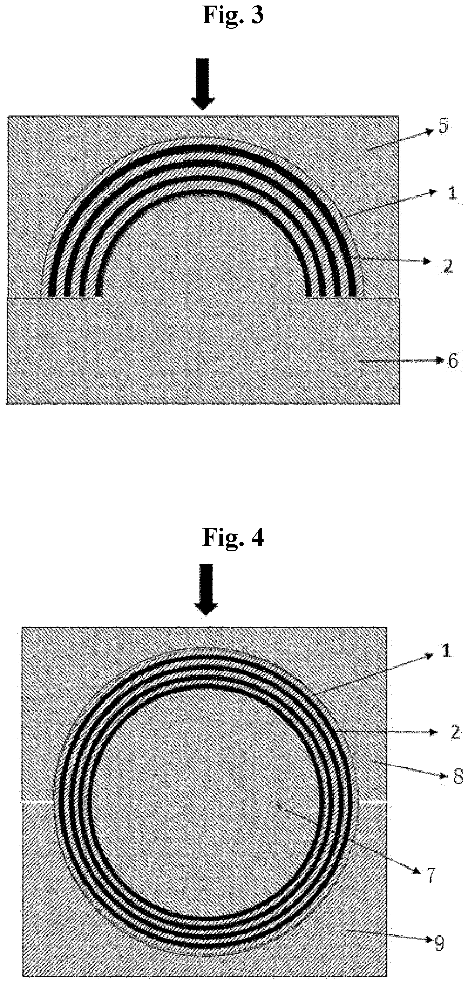

(S2) A plurality of Fe₉₀Cr₉Al_{0.5}Zn_{0.5} metal sheets plated with the rare earth compound Nd₇₂Dy₁Ho₂Cu₃Ti_{0.3}Zn_{0.2}Fe₁₉B_{2.5} coatings were stacked into a tile-like shape in a tile-like-shaped tool with a length being 10mm, a center angle is 180° and a height being 15mm, a thickness of the stacked FeₐG_{b} metal sheets 1 was defined as h₂, and in this embodiment, h₂=10mm. After stacking, it should ensure that there was at least one rare earth compound REₓM_{y}B_{z} coating 2 between the adjacent two FeₐG_{b} metal sheets 1. Referring to Figure 3 for a specific tool, 5 was a lower tile-like-shaped extrusion tooling mold, 6 was an upper tile-like-shaped extrusion tooling mold, and an arrow represented a force applying direction.

(S3) An extrusion force was applied to the stacked FeₐG_{b} metal sheets 1, and was subjected to high-temperature diffusion under a vacuum condition, so as to prepare a neodymium-iron-boron magnet, where a diffusion temperature was 1200°C, and a diffusion time was 8h; and finally, a tile-like-shaped neodymium-iron-boron magnet was obtained.

The above obtained neodymium-iron-boron magnet was cut into a sample column with a diameter being 10mm and a height being 10mm, then a magnetic performance test (temperature being 20°C±3°C) was performed, and test results were recorded in Table 2.

**Table 2 Magnetic performance of sample in Embodiment II**

| Magnet name | Br (KGs) | Hcj (KOe) |
|---|---|---|
| Embodiment 2 | 9.68 | 10.35 |

From the above test results, it might be seen that, Br of the tile-like-shaped magnet with a dimension thickness being 10mm prepared in Embodiment 2 was 9.68, and Hcj was 10.35 and had high magnetic performance.

### Embodiment 3

(S1) A FeₐG_{b} metal ingot was smelted, and then extruded into a FeₐG_{b} metal sheet 1 through extrusion. In this embodiment, FeₐG_{b} was Fe₇₅Mn₃Cu₁Ho₂Co₃Zr₁₀Ni₈, that is, G represented a group of a manganese element, a copper element, a holmium element, a cobalt element, a zirconium element, and a nickel element. a and b were mass percentages, a was 75%, and b was 25%, where a mass percentage of the manganese element was 3%, a mass percentage of the copper element was 1%, a mass percentage of the holmium element was 2%, a mass percentage of the cobalt element was 3%, a mass percentage of the zirconium element was 10%, and a mass percentage of the nickel element was 8%. A rare earth compound REₓM_{y}B_{z} coating 2 was sprayed on an upper surface of the Fe₇₅Mn₃Cu₁Ho₂Co₃Zr₁₀Ni₈ metal sheet through plasma spraying. In this embodiment, REₓM_{y}B_{z} was Pr₆₀Ce₃₀Cu_{1.5}Mn_{0.5}Ga₁Fe₄B₃, that is, RE was a praseodymium element and a cerium element, M was a group of a copper element, a manganese element, a gallium element, and an iron element, and B was a boron element. x, y, and z were mass percentages. In this embodiment, x was 90%, that is, a mass percentage of the praseodymium element was 60%, and a mass percentage of the cerium element was 30%; y was 7%, where a mass percentage of the copper element was 1.5%, a mass percentage of the manganese element was 0.5%, a mass percentage of the gallium element was 1%, and a mass percentage of the iron element was 4%; and z was 3%, that is, a mass percentage of the boron element was 3%. A mass of the single FeₐG_{b} metal sheet 1 was defined as M₁, and a mass of the rare earth compound REₓM_{y}B_{z} coating 2 on the single FeₐG_{b} metal sheet 1 was defined as M₂, where M₂/M₁=60%. A thickness of the single FeₐG_{b} metal sheet 1 was defined as h₁, and in this embodiment, h₁=0.5mm.

(S2) A plurality of Fe₇₅Mn₃Cu₁Ho₂Co₃Zr₁₀Ni₈ metal sheet coated with the rare earth compound Pr₆₀Ce₃₀Cu_{1.5}Mn_{0.5}Ga₁Fe₄B₃ coatings were stacked into a square in a square tool with a length being 60mm and a width being 40mm, a thickness of the stacked FeₐG_{b} metal sheets 1 was defined as h₂, and in this embodiment, h₂=80mm. After stacking, it should ensure that there was at least one rare earth compound REₓM_{y}B_{z} coating 2 between the adjacent two FeₐG_{b} metal sheets 1. Referring to Figure 2 for a specific tool, 3 was a lower square extrusion tooling mold, and 4 was an upper square extrusion tooling mold.

(S3) An extrusion force was applied to the stacked FeₐG_{b} metal sheets 1, and was subjected to high-temperature diffusion under a vacuum condition, so as to prepare a neodymium-iron-boron magnet, where a diffusion temperature was 1200°C, and a diffusion time was 10 h; and finally, a square neodymium-iron-boron magnet was obtained.

The above obtained neodymium-iron-boron magnet was cut into a sample column with a diameter being 10mm and a height being 10mm, then a magnetic performance test (temperature being 20°C±3°C) was performed, and test results were recorded in Table 2.

**Table 3 Magnetic performance of sample in Embodiment 3**

| Magnet name | Br (KGs) | Hcj (KOe) |
|---|---|---|
| Embodiment 3 | 8.23 | 10.45 |

From the above test results, it might be seen that, Br of the square magnet with a dimension thickness being 80mm prepared in Embodiment 3 was 8.23, and Hcj was 10.45 and had high magnetic performance.

### Embodiment 4

(S1) A FeₐG_{b} metal sheet 1 was prepared, and in this embodiment, FeₐG_{b} was pure iron, where a and b were mass percentages, that is, a was 100%, and b was 0%. A rare earth compound REₓM_{y}B_{z} coating 2 was plated on an upper surface of the FeₐG_{b} metal sheet 1 through vacuum coating. In this embodiment, REₓM_{y}B_{z} was Nd₆₀Pr₃₃La₁Tb_{0.5}Ho_{0.5}Mn_{0.5}Ga_{0.5}B₄, that is, RE was a group of a neodymium element, a spectral element, a lanthanum element, a terbium element, and a holmium element, M was a group of a manganese element and a gallium element, and B was a boron element. x, y, and z were mass percentages. In this embodiment, x was 95%, that is, a mass percentage of the neodymium element was 60%, a mass percentage of the spectral element was 33%, a mass percentage of the lanthanum element was 1%, a mass percentage of the terbium element was 0.5%, and a mass percentage of the holmium element was 0.5%; y was 1%, where a mass percentage of the manganese element was 0.5%, and a mass percentage of the gallium element was 0.5%; and z was 4%, that is, a mass percentage of the boron element was 4%. A mass of the single FeₐG_{b} metal sheet was defined as M₁, and a mass of the rare earth compound REₓM_{y}B_{z} coating 2 on the single FeₐG_{b} metal sheet 1 was defined as M₂, where M₂/M₁=40%. A thickness of the single FeₐG_{b} metal sheet 1 was defined as h₁, and in this embodiment, h₁=0.1mm.

(S2) A plurality of FeₐG_{b} metal sheets 1 plated with the rare earth compound Nd₆₀Pr₃₃La₁Tb_{0.5}Ho_{0.5}Mn_{0.5}Ga_{0.5}B₄ coatings were multi-layer wound on a core rod with a diameter being 56mm and a height being 30mm, a thickness of the stacked FeₐG_{b} metal sheets 1 was defined as h₂, in this embodiment, h₂=2mm, and then the core rod was placed in a circular tool with an inner diameter being 60mm. Referring to Figure 4 for a specific tool, 7 was a ring-shaped extrusion tooling core rod, and 8 was an upper ring-shaped extrusion tooling mold.

(S3) An extrusion force was applied to the wound FeₐG_{b} metal sheets 1, and was subjected to high-temperature diffusion under a vacuum condition, so as to prepare a neodymium-iron-boron magnet, where a diffusion temperature was 1150°C, and a diffusion time was 2h; and finally, a ring-shaped neodymium-iron-boron magnet with an inner diameter being 60mm and a wall thickness being 2mm was obtained.

The above obtained neodymium-iron-boron magnet was cut into a sample column with a diameter being 10mm and a height being 2mm, then a magnetic performance test (temperature being 20°C±3°C) was performed, and test results were recorded in Table 4.

**Table 4 Magnetic performance of sample in Embodiment IV**

| Magnet name | Br (KGs) | Hcj (KOe) |
|---|---|---|
| Embodiment 4 | 10.08 | 9.58 |

From the above test results, it might be seen that, Br of the ring-shaped magnet prepared in Embodiment 4 was 10.08, and Hcj was 9.58 and had high magnetic performance.

### Embodiment 5

(S1) A FeₐG_{b} metal ingot was smelted, and then extruded into a FeₐG_{b} metal sheet 1 through extrusion. In this embodiment, FeₐG_{b} was Fe₉₅Ni₂Nb_{0.5}Mo_{1.5}Co₁, that is, G represented a group of a nickel element, a niobium element, a molybdenum element, and a cobalt element. a and b were mass percentages, in this embodiment, a was 95%, and b was 5%, where a mass percentage of the nickel element was 2%, a mass percentage of the niobium element was 0.5%, a mass percentage of the molybdenum element was 1.5%, and a mass percentage of the cobalt element was 1%. A rare earth compound REₓM_{y}B_{z} coating 2 was sprayed on an upper surface of the Fe₉₅Ni₂Nb_{0.5}Mo_{1.5}Co₁ metal sheet through vacuum coating. In this embodiment, REₓM_{y}B_{z} was Nd₈₅Al₁Cu_{0.5}Ga_{0.5}Fe₁₀Co_{0.5}B_{2.5}, that is, RE was a neodymium element, M was a group of an aluminum element, a copper element, a gallium element, an iron element, and a cobalt element, and B was a boron element. x, y, and z were mass percentages. In this embodiment, x was 85%, that is, a mass percentage of the neodymium element was 80%; y was 12.5%, where a mass percentage of the aluminum element was 1%, a mass percentage of the copper element was 0.5%, a mass percentage of the gallium element was 0.5%, a mass percentage of the iron element was 10%, and a mass percentage of the cobalt element was 0.5%; and z was 2.5%, that is, a mass percentage of the boron element was 2.5%. A mass of the single FeₐG_{b} metal sheet 1 was defined as M₁, and a mass of the rare earth compound REₓM_{y}B_{z} coating 2 on the single FeₐG_{b} metal sheet 1 was defined as M₂, where M₂/M₁=55%. A thickness of the single FeₐG_{b} metal sheet 1 was defined as h₁, and in this embodiment, h₁=0.02mm.

(S2) A plurality of Fe₉₅Ni₂Nb_{0.5}Mo_{1.5}Co₁ metal sheets plated with the rare earth compound Nd₈₅Al₁Cu_{0.5}Ga_{0.5}Fe₁₀Co_{0.5}B_{2.5} coatings were stacked in a square tool with a length being 10mm and a width being 10mm, a thickness of the stacked FeₐG_{b} metal sheets 1 was defined as h₂, and in this embodiment, h₂=0.04mm. After stacking, it should ensure that there was at least one rare earth compound REₓM_{y}B_{z} coating between the adjacent two FeₐG_{b} metal sheets 1.

(S3) An extrusion force was applied to the stacked FeₐG_{b} metal sheets 1, and was subjected to high-temperature diffusion under a vacuum condition, so as to prepare a neodymium-iron-boron magnet, where a diffusion temperature was 1000°C, and a diffusion time was 0.5h; and finally, a square neodymium-iron-boron magnet was obtained.

The above obtained neodymium-iron-boron magnet was cut into a sample column with a diameter being 10mm and a height being 0.04mm, then a magnetic performance test (temperature being 20°C±3°C) was performed, and test results were recorded in Table 5.

**Table 5 Magnetic performance of sample in Embodiment V**

| Magnet name | Br (KGs) | Hcj (KOe) |
|---|---|---|
| Embodiment 5 | 9.65 | 11.57 |

From the above test results, it might be seen that, Br of the square magnet prepared in Embodiment 5 was 9.65, and Hcj was 11.57 and had high magnetic performance.

### Embodiment 6

(S1) A FeₐG_{b} metal sheet 1 was prepared, and in this step, FeₐG_{b} was pure iron, where a and b were mass percentages, where a was 100%, and b was 0%. A rare earth compound REₓM_{y}B_{z} coating 2 was sprayed on an upper surface of the FeₐG_{b} metal sheet 1 through vacuum coating. In this step, REₓM_{y}B_{z} was Nd₆₀Pr_{3 4}Tb_{0.5}Ho_{0.5}Mn_{0.5}Ga_{0.5}B₄, that is, RE was a group of a neodymium element, a praseodymium element, a terbium element, and a holmium element, M was a group of a manganese element and a gallium element, and B was a boron element. x, y, and z were mass percentages. In this embodiment, x was 95%, that is, a mass percentage of the neodymium element was 60%, a mass percentage of the praseodymium element was 34%, a mass percentage of the terbium element was 0.5%, and a mass percentage of the holmium element was 0.5%; y was 1%, where a mass percentage of the manganese element was 0.5%, and a mass percentage of the gallium element was 0.5%; and z was 4%, that is, a mass percentage of the boron element was 4%. A mass of the single FeₐG_{b} metal sheet 1 was defined as M₁, and a mass of the rare earth compound REₓM_{y}B_{z} coating 2 on the single FeₐG_{b} metal sheet 1 was defined as M₂, where M₂/M₁=40%. A thickness of the single FeₐG_{b} metal sheet 1 was defined as h₁, and in this embodiment, h₁=0.1mm.

(S2) A plurality of FeₐG_{b} metal sheets 1 plated with the rare earth compound Nd₆₀Pr₃₄Tb_{0.5}Mn_{0.5}Ga_{0.5}Ho_{0.5}B₄ coatings in step (S1) were stacked in a square tool with both length and width being 30mm, and a stacked thickness was 5mm.

(S3) The FeₐG_{b} metal sheet 1 was continuously prepared, in this step, FeₐG_{b} was Fe₉₅Ni₂Nb_{0.5}Mo_{1.5}Co₁, where G was a group of a nickel element, a niobium element, a molybdenum element, and a cobalt element. a and b were mass percentages, where a was 95%, and b was 5%. A rare earth compound REₓM_{y}B_{z} coating 2 was plated on an upper surface of the FeₐG_{b} metal sheet 1 through vacuum coating. In this step, REₓM_{y}B_{z} was Nd₈₅Al₁Cu_{0.5}Ga_{0.5}Fe₁₀Co_{0.5}B_{2.5}, that is, RE was a group of a neodymium element, M was a group of an aluminum element, a copper element, a gallium element, an iron element, and a cobalt element, and B was a boron element. x, y, and z were mass percentages. In this embodiment, x was 85%, that is, a mass percentage of the neodymium element was 85%; y was 12.5%, where a mass percentage of the aluminum element was 1%, a mass percentage of the copper element was 0.5%, a mass percentage of the gallium element was 0.5%, a mass percentage of the iron element was 10%, and a mass percentage of the cobalt element was 2.5%; and z was 2.5%, that is, a mass percentage of the boron element was 2.5%. A mass of the single FeₐG_{b} metal sheet was defined as M₁, and the mass of the rare earth compound REₓM_{y}B_{z} coating 2 on the single FeₐG_{b} metal sheet was defined as M₂, where M₂/M₁=55%. A thickness of the single FeₐG_{b} metal sheet was defined as h₁, and in this embodiment, h₁=0.02mm.

(S4) The Fe₉₅Ni₂Nb_{0.5}Mo_{1.5}Co₁ metal sheet plated with the rare earth compound Nd₈₅Al₁Cu_{0.5}Ga_{0.5}Fe₁₀Co_{0.5}B_{2.5} coating in step (S3) was placed in the square tool in step (S2), multi-layer stacking was continuously performed on the stacked product, and a final stacking thickness was defined as h₂, where h₂=10mm.

(S5) An extrusion force was applied to the stacked FeₐG_{b} metal sheets, and was subjected to high-temperature diffusion under a vacuum condition, so as to prepare a neodymium-iron-boron magnet, where a diffusion temperature was 1050°C, and a diffusion time was 5h; and finally, a square neodymium-iron-boron magnet was obtained.

The above obtained neodymium-iron-boron magnet was cut into a sample column with a diameter being 10mm and a height being 15mm, then a magnetic performance test (temperature being 20°C±3°C) was performed; and then the sample was partitioned into a cut sample column 1, cut sample column 2, and cut sample column 3 with diameters being 10mm and heights being 5mm, and all test results were recorded in Table 6.

**Table 6 Magnetic performance of sample in Embodiment VI**

| Magnet name | Br (KGs) | Hcj (KOe) |
|---|---|---|
| Sample column | 9.8 | 11.2 |
| Cut sample column 1 | 10.05 | 9.63 |
| Cut sample column 2 | 9.57 | 11.48 |
| Cut sample column 3 | 9.71 | 11.57 |

From the above test results, it might be seen that, the square magnet prepared in Embodiment 6 had overall performance of Br=9.65 and Hcj=11.57, and had high magnetic performance, and the test results after cutting showed that the magnet had different properties within different thickness ranges, and thus belonged to magnets with gradient variation in property.

### Reference Signs:

- 1: metal sheet
- 2: coating
- 3: jower square extrusion tooling mold
- 4: upper square extrusion tooling mold
- 5: lower tile-like-shaped extrusion tooling mold
- 6: upper tile-like-shaped extrusion tooling mold
- 7: ring-shaped extrusion tooling core rod
- 8: upper ring-shaped extrusion tooling mold
- 9: lower ring-shaped extrusion tooling mold
- 10: upper cylindrical extrusion tooling mold
- 11: lower cylindrical extrusion tooling mold

## Claims

1. A method for preparing a neodymium-iron-boron magnet, comprising the following steps:
(S1) preparing a FeₐG_{b} metal sheet (1), and covering at least one side surface of the FeₐG_{b} metal sheet with a rare earth compound REₓM_{y}B_{z} coating (2),
wherein in the FeₐG_{b} metal sheet:
Fe is iron,
G is one or more element selected from the group consisting of Sc, Ti, V, Cr, Mn, Co, Ni, Cu, Zn, Ga, Ge, Y, Zr, Nb, Mo, Ru, Rh, Pd, Ag, Cd, In, Sn, Sb, Lu, Hf, Ta, W, Re, Os, Ir, Pt, Au, Hg, Tl, Pb, Bi, La, Ce, Pr, Nd, Pm, Sm, Eu, Gd, Tb, Dy, Ho, Er, Tm, and Yb, and
a and b are mass percentages, wherein 70%≤a≤100% and 0%≤b≤30%, and
wherein in the rare earth compound REₓM_{y}B_{z} coating:
RE is one or more rare-earth element selected from the group consisting of Sc, Y, La, Ce, Pr, Nd, Sm, Eu, Gd, Tb, Dy, Ho, Er, Tm, Yb, and Lu,
M is one or more element selected from the group consisting of Fe, Al, Ti, Cu, Zn, Mn, Co, and Ga,
B is a boron, and
x, y, and z are mass percentages, wherein 65%≤x≤98%, 1%≤z≤5%, and y=1-x-z;
(S2) mutually stacking the FeₐG_{b} metal sheets covered with the rare earth compound REₓM_{y}B_{z} coatings to a set thickness in a tool, and after stacking, ensuring that there is at least one rare earth compound REₓM_{y}B_{z} coating between the adjacent two FeₐG_{b} metal sheets; and
(S3) applying an extrusion force to the stacked FeₐG_{b} metal sheets, and performing high-temperature diffusion on the metal sheets under a vacuum condition, so as to obtain the neodymium-iron-boron magnet.

2. The method for preparing a neodymium-iron-boron magnet according to claim 1, wherein in the FeₐG_{b} metal sheet (1)75%≤a≤100% and 0%≤b≤25%.

3. The method for preparing a neodymium-iron-boron magnet according to claim 1 or 2, wherein RE in the rare earth compound REₓM_{y}B_{z} coating (2) is one or more selected from a neodymium element, a praseodymium element, a cerium element, a lanthanum element, a terbium element, a dysprosium element, or a holmium element, 70%≤x≤95%, 2%≤z≤4%, and y=1-x-z.

4. The method for preparing a neodymium-iron-boron magnet according to claim 1, wherein a mass of the single FeₐG_{b} metal sheet (1) is defined as M₁, and a mass of the rare earth compound REₓM_{y}B_{z} coating (2) on the single FeₐG_{b} metal sheet is defined as M₂, wherein 40%≤M₂/M₁≤80%.

5. The method for preparing a neodymium-iron-boron magnet according to one of the preceding claims, wherein a thickness of the single FeₐG_{b} metal sheet (1) is defined as h₁, wherein 0.01mm≤h1≤0.6mm, preferably 0.02mm≤h₁≤0.5mm.

6. The method for preparing a neodymium-iron-boron magnet according to any one of the preceding claims, wherein a thickness of the stacked FeₐG_{b} metal sheets (1) and a thickness of the rare earth compound REₓM_{y}B_{z} coatings (2) are defined as h₂, wherein 0.03≤h₂≤90mm, preferably 0.04≤h₂≤80mm.

7. The method for preparing a neodymium-iron-boron magnet according to any one of the preceding claims, wherein covering surface of the FeₐG_{b} metal sheet (1) with the rare earth compound REₓM_{y}B_{z} coating (2) comprises at least one of vacuum coating, plasma spraying, and thermal spraying.

8. The method for preparing a neodymium-iron-boron magnet according to any one of the preceding claims, wherein the FeₐG_{b} metal sheets (1) are mutually stacked to form a square, a tile-like shape, a cylindrical shape, or a ring shape.

9. The method for preparing a neodymium-iron-boron magnet according to any one of the preceding claims, wherein a diffusion temperature in step (S3) is 1000°C to 1200°C, and a diffusion time is 0.5h to 10h.

10. A neodymium-iron-boron magnet, obtained through the method according to any one of the preceding claims.
